# EUROPEAN PATENT APPLICATION

(11) **EP 4 446 239 A1**
(43) Date of publication of application: **16.10.2024**
(21) Application number: 24169769.7
(22) Date of filing: 11.04.2024
(51) Int. Cl.: B64D 47/00, G06F 3/01, B64D 43/00, B64D 11/06

(54) **AUTOMATIC PILOT EYE POINT POSITIONING SYSTEM**

(30) Priority: 12.04.2023 US 202318133824
(71) Applicant: AMI Industries, Inc., Colorado Springs, CO 80916 (US)
(72) Inventor: PACHECO, Chad R., Colorado Springs, 80917 (US)
(74) Representative: Dehns

(57) **Abstract**

A controller (204) using image sensors (202) and eye tracking software tracks the position of the eyes of the pilot. The controller causes an actuator of a pilot seat (114) to automatically adjust the seat position to the Design Eye Point (DEP). The automatic adjustment of the seat position to the design eye point reduces the workload of the pilot and ensures accurate position of the eyes within the design eye point. The reduced workload may be particularly advantageous during an emergency event.

## Description

### TECHNICAL FIELD

The present invention generally relates to aircraft seating, and more specifically to automatic positioning of aircraft seating.

### BACKGROUND

Pilots are required to reposition their seat position until their eyes are at a designated position called the design eye position (DEP). The design eye position allows the pilot to view the Heads-Up Display and view outside of the cockpit. The seat repositioning is a completely manual operation that involves the pilot adjusting the height and horizontal position while looking at reference balls positioned near the windshield. Once a first reference ball is visually covered by the second reference ball the pilot is in the design eye position. However, the pilots must manually perform the adjustment each time they are seated in the aircraft.

The pilot may recline the seat when autopilot is engaged. The reclined position may be undesirable during an emergency event due to reduced vision when positioned outside of the design eye point. During the emergency event, the pilots must reposition the pilot seat until the eyes are at the design eye position. The repositioning is undesirable in increasing the pilot's workload. Therefore, it would be advantageous to provide a device, system, and method that cures the shortcomings described above.

### SUMMARY

A system is described in accordance with one or more embodiments of the present disclosure. In some embodiments, the system includes a pilot seat comprising one or more actuators. In some embodiments, the system includes an image sensor. In some embodiments, the system includes a controller.

The controller is described, in accordance with one or more embodiments of the present disclosure. In some embodiments, the controller includes a memory maintaining program instructions. In some embodiments, the controller includes one or more processors configured to execute the program instructions. In some embodiments, the program instructions cause the one or more processors to receive an image from an image sensor. The image comprises depth data, vertical position data, and lateral position data. In some embodiments, the program instructions cause the one or more processors to detect a position of an eye within the image. In some embodiments, the program instructions cause the one or more processors to determine a distance from the image sensor to the eye based on the depth data associated with the position of the eye within the image. In some embodiments, the program instructions cause the one or more processors to determine a distance from the eye to a design eye position based on the distance from the image sensor to the eye. The distance from the eye to the design eye position includes a longitudinal distance value, a vertical distance value, and a lateral distance value. In some embodiments, the program instructions cause the one or more processors to generate an actuation signal based on the distance from the eye to the design eye position. The actuation signal causes one or more actuators to actuate a pilot seat. The actuation of the pilot seat causes the eye to move towards the design eye position reducing the distance from the eye to the design eye position. In particular, the pilot seat is longitudinally actuated to reduce the longitudinal distance value and vertically actuated to reduce the vertical distance value. The pilot seat may optionally be laterally adjusted to reduce the lateral distance value, although this is not intended to be limiting.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 depicts a cockpit of an aircraft, in accordance with one or more embodiments of the present disclosure.
FIG. 2 depicts a simplified block diagram of a system of an aircraft, in accordance with one or more embodiments of the present disclosure.
FIG. 3 depicts a simplified block diagram of a controller, in accordance with one or more embodiments of the present disclosure.
FIG. 4 depicts a flow diagram of a method, in accordance with one or more embodiments of the present disclosure.
FIGS. 5A-5D depict images, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Referring generally now to one or more embodiments of the present disclosure. Embodiments of the present disclosure are generally directed to a controller using image sensors and eye tracking software to track the position of the eyes of the pilot. The controller causes an actuator control system within the pilot seat to automatically adjust the seat position to the correct Design Eye Point (DEP). The automatic adjustment of the seat position to the design eye point may reduce the workload of the pilot and ensure accurate position of the eyes within the design eye point. The reduced workload may be particularly advantageous during an emergency event.

U.S. Patent Publication Number 2023/0043771, titled "System and method for assessing operator situational awareness via context-aware gaze detection", filed on August 5, 2021; U.S. Patent Number 9,864,917, titled "Avionics data capturing system, device, and method", filed on September 19, 2016; U.S. Patent Number 9,521 ,374, titled "Real time relative performance indication for redundant avionics optical data transmission systems for aerial refueling", filed on June 28, 2013; U.S. Patent Number 9,527,602, titled "System for and method of providing an enhanced vision image using synchronization", filed on May 10, 2013; U.S. Patent Publication Number 2023/0039764, titled "System and method for gaze and pose detection to anticipate operator intent", filed on August 5, 2021; U.S. Patent Number 9,829,995, titled "Eye tracking to move the cursor within view of a pilot", filed on April 28, 2014.

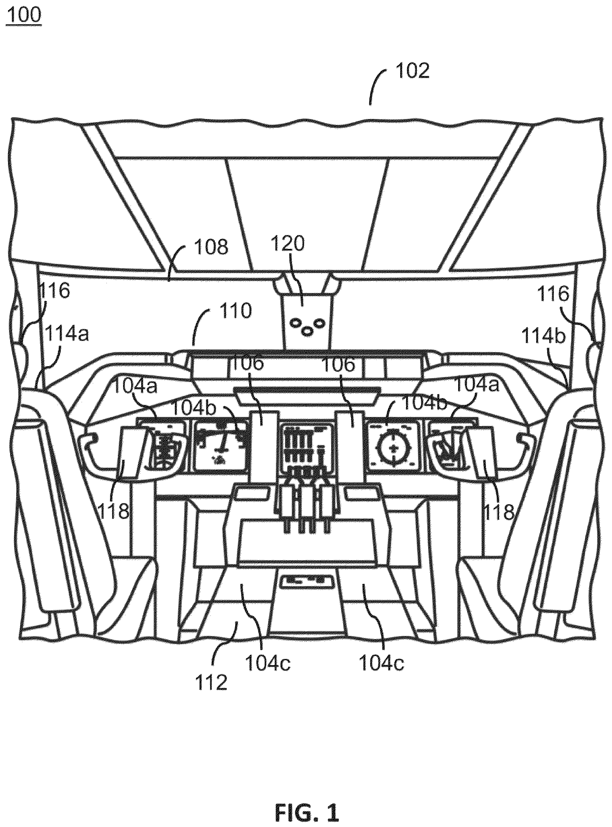

Referring to FIG. 1, a cockpit 102 of an aircraft 100 is shown, according to some embodiments. The cockpit 102 may also be referred to as a control center or a flight deck. The cockpit 102 may include one or more flight displays 104, one or more user interface ("Ul") elements 106, one or more pilot seats 114, one or more control sticks 118, eye reference indicators 120, and the like.

The flight displays 104 may be implemented using any of a variety of display technologies, including CRT, LCD, organic LED, dot matrix display, and others. Touchscreens may be implemented on the flight displays 104. Any single or multi-touch technology will support the concepts described herein. It is further contemplated that one or more of the flight displays 104 may not include touchscreen functionality. In this regard, the flight display 104 may include a touchscreen or a non-touch display (i.e., without touchscreen functionality). The flight displays 104 may also be referred to as display units (DUs).

The flight displays 104 may be head-down displays (HDD). HDD may be located on a main instrument panel of the cockpit 102 in front of the pilot and below a windscreen 108 and/or glareshield 110. The flight displays 104 may be used to display various images. The images may provide information to the pilot (e.g., captain, first officer), thereby increasing the pilot's visual range and enhancing their decision-making abilities. The images on the flight displays 104 may be provided in a standard or certified format.

The flight displays 104 may be primary flight displays (PFD 104a), multi-function displays (MFD 104b), auxiliary flight displays (AFD 104c), and so on. Other types and functions of the flight displays 104 are contemplated and will be apparent to those skilled in the art. For instance, the flight displays 104 may also be configured to function as, for example, an engine indicating and crew-alerting system ("EICAS") display. The EICAS display may be used to display critical engine and system status data.

The flight displays 104 may be configured to function as, for example, a primary flight display (PFD 104a). The PFDs 104a may be used to display primary flight information, such as, but not limited to, altitude, airspeed, vertical speed, and navigation and traffic collision avoidance system ("TCAS") advisories. The PFDs 104a may be located directly in front of the pilot (e.g., captain, first officer) and may provide primary flight information, such as, altitude, airspeed, and heading.

The flight displays 104 may also be configured to function as, for example, a multi-function display (MFD 104b). The MFDs 104b may be used to display the primary flight information and/or various other information such as, but not limited to, navigation maps, weather radar, electronic charts, TCAS traffic, aircraft maintenance data and electronic checklists, manuals, procedures, system information, and the like. The MFDs 104b may be located to one side or another of the PFD 104a. The MFDs 104b may also be referred to as navigation ("NAV") displays.

The flight displays 104 may also be configured to function as, for example, an auxiliary flight display (AFD 104c). The cockpit 102 is shown to include a central pedestal 112.One or more of the AFDs 104c may be disposed in the central pedestal 112 of the cockpit 102. The AFDs 104c may include a touchscreen display and/or a hard keyboard display. The AFDs 104c may also be referred to as control display units (CDUs).

In some embodiments, the flight displays 104 may provide an output from an aircraft-based system, a ground-based system, a satellite-based system, or from a system of another aircraft. For example, in one embodiment, the flight displays 104 provide an output from a ground-based weather radar system. In some embodiments, the flight displays 104 provide an output from an aircraft-based weather radar system, LIDAR system, infrared system or other system on the aircraft. For example, the flight displays 104 may include an avionics display, a joint display, an air traffic display, a weather radar map, and a terrain display. The flight displays 104 may include an electronic display or a synthetic vision system ("SVS"). For example, the flight displays 104 may include a display configured to display a two-dimensional ("2-D") image, a three-dimensional ("3-D") perspective image of air traffic data, terrain, and/or weather information, or a four-dimensional ("4-D") display of weather information or forecast information. Other views of air traffic information, terrain, and/or weather information may also be provided (e.g., plan view, horizontal view, and vertical view). The views shown on the flight displays 104 may include monochrome or color graphical representations of the displayed information. Graphical representations of the displayed information may include an indication of altitude of other aircraft, weather conditions, or terrain, or the altitude and/or location of such information relative to the aircraft.

The UI elements 106 are now described. The UI elements 106 may include, for example, dials, switches, buttons, touch screens, keyboards, a mouse, joysticks, cursor control devices ("CCDs") or other multi-function key pads certified for use with avionics systems, and so on. The UI elements 106 may be configured to, for example, allow an aircraft crew member to interact with various avionics applications and perform functions such as data entry, manipulation of navigational maps, and moving among and selecting checklist items. For example, the UI elements 106 may be used to adjust features of the flight displays 104, such as contrast, brightness, width, and length. The UI elements 106 may also (or alternatively) be used by an aircraft crew member to interface with or manipulate the displays of the flight displays 104. The UI elements 106 may additionally be used to acknowledge or dismiss an indicator provided by the flight displays 104.

The cockpit 102 may include one or more pilot seats 114. The pilot seats 114 may include a seat 114a and a seat 114b. The seat 114a may be disposed on a left side of the cockpit 102 and the office seat 114b may be disposed on a right side of the cockpit 102. The pilot seat 114a may be for the captain of the aircraft 100, such that the pilot seat 114a may be referred to as a captain seat. The pilot seat 114b may be for the first-officer of the aircraft 100, such that the pilot seat 114b may be referred to as a first-officer seat.

The pilot may be seated on the pilot seat 114. The pilot may be seated on the pilot seat 114 throughout the duration of a flight, remaining in the cockpit seat through pre-flight checks, taxiing, flight segments (e.g., takeoff, climb, cruise, descent, landing), and taxiing to destination before disembarkation, apart from short periods when the pilot may not be in control of the aircraft (e.g., when another pilot or operator takes control so the operator may temporarily leave the cockpit). While seated in the cockpit seat, the pilot may interact with, activate, or otherwise physically and/or visually engage with various cockpit interfaces.

The pilot seats 114 may include a headrest 116. The headrest 116 may be configured to support a head of the pilot sitting on the pilot seat 114.

The cockpit 102 may include the eye reference indicators 120. The eye reference indicators 120 may be a set of balls which the pilots each use as a reference when manually adjusting the position of the pilot seats 114. The pilots may use the eye reference indicators to manually adjust the position of the pilot seats 114 until the eyes of the pilot are disposed at a design eye position. Although the cockpit 102 is described as including the eye reference indicators 120 and the pilots are described as manually adjusting the position of the pilot seats 114, this is not intended as a limitation of the present disclosure. In embodiments, the cockpit includes a system 200 to automatically adjust the position of the pilot seat 114 until the eye of the pilot is disposed at the design eye position.

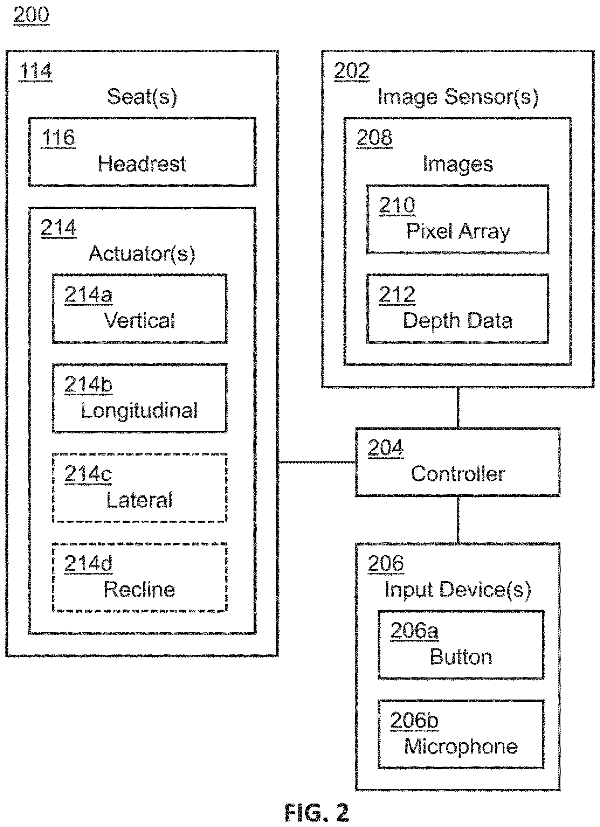

Referring now to FIG. 2, a simplified block diagram of a system 200 is described, in accordance with one or more embodiments of the present disclosure. The system 200 may also be referred to as an Automatic Pilot Eye Point Positioning System. The system 200 may be housed within the aircraft 100. The system 200 may include the pilot seats 114, one or more image sensors 202, one or more controllers 204, one or more input devices 206, and the like. One or more of components of the system 200 be communicatively coupled by one or more control buses or the like.

The system 200 includes the image sensors 202. The image sensors 202 are disposed within the cockpit 102 and oriented toward the pilot. The image sensors 202 may be oriented to generate images 208 of the pilot seated on the pilot seat 114. In embodiments, at least a portion of the pilot seats 114 are disposed in the video. The portion of the seats may include the headrest 116 of the pilot seats 114, such that the head of the pilot is disposed within the images 208 when the pilot is seated.

In embodiments, the image sensors 202 are installed within the cockpit 102. It is contemplated that the image sensors 202 may be coupled to any of the glareshield 110, below the glareshield 110, embedded in the flight displays 104 (e.g., PFD 104a, MFD 104b, AFD 104c), adjacent to the flight displays 104, coupled to the control stick 118, and the like. It is contemplated that the image sensors 202 may be coupled at any of the various positions to reduce the glare in the images 208.

Any number of the image sensors 202 may be installed within the cockpit 102 to capture the images 208 of the pilots. The number of, position of, angle of placement of, and height of the image sensors 202 with respect to the cockpit 102 may be selected to achieve a maximum field of view of the cockpit 102 and optimum quality of the images 208. In some embodiments, multiple of the image sensors 202 may be installed within the cockpit 102. For example, a first image sensor may generate images of the captain seated on the captain seat and a second image sensor may generate image of the first-officer seated on the first-officer seat. In embodiments, one of the image sensors 202 may be installed within the cockpit 102. The image sensor 202 may include a field-of-view which generates the images 208 of both the captain seated on the captain seat and the first-officer seated on the first-officer seat.

The image sensors 202 are configured to generate images 208. The images 208 may also be referred to as frames. The images 208 may include a resolution, an aspect ratio, and the like based on one or more characteristics of the image sensor 202. The images may be still images, a sequence of images, a video, a live video feed, and the like. The images may include a sequence of images which form a video. The video may include a frames per second based on one or more characteristics of the image sensor. The characteristics of the image sensor 202 may be predefined or reconfigurable. The images 208 may be in any image file format. In embodiments, the images 208 include a pixel array 210 and depth data 212.

The images 208 include the pixel array 210. The pixel array 210 may be an array of XY points (e.g., X vertical arrays of Y pixels each). The pixels in the pixel array may include one or more values associated with each XY point. The pixel array 210 may generally include any color channel. For example, the images 208 may be grayscale images with an intensity value associated with each XY point. By way of another example, the images 208 may be color images with, RGB values, CMYK values, HSV values, or the like associated with each XY point. The pixel array 210 may also be referred to as a raster image, a raster map, or the like.

In some embodiments, the image sensors 202 generate the pixel arrays 210. The image sensors 202 includes any suitable image sensor, such as, but not limited to, a charge couple device (CCD) detector, a complementary metal-oxide semiconductor (CMOS), or the like.

The images also include the depth data 212. The depth data 212 may be associated with the pixel array 210. The depth data 212 may also be referred to as a depth map or a depth channel. For example, each XY point may include a depth value of to the XY point. The distance of the XY point may indicate the distance of the image sensor to a reflected object in the image 208. In some embodiments, the reflected object is an eye of a pilot sitting on the pilot seat 114. In this regard, the depth data 212 may indicate a distance from the image sensors 202 to the eye.

In some embodiments, the image sensors 202 generate depth data 212. For example, the image sensors 202 may be 3D image sensors configured to generate the images 208 with the depth data. The 3D image sensors may include laser-based light detection and ranging (LIDAR) systems incorporating onboard photodetectors to track reflected beams and return the depth data, imaging systems including infrared illuminators combined with multiple embedded cameras, time of flight (ToF) camera systems, or any other like sensor system capable of producing 3D spatial information of proximate objects. The 3D image sensors may include any suitable sensors for determining the depth data 212, such as, but not limited to, distance sensors. For example, distance sensors may include sensors equipped to detect infrared radiation together with infrared or laser illuminators (e.g., light detection and ranging (LIDAR) systems.

In some embodiments, the image sensor 202 may generate the images 208 by transmitting and receiving light. The light may include any wavelength in the electromagnetic spectrum. For example, the image sensor 202 may be an infrared (IR) sensor using light within the IR electromagnetic spectrum. It is further contemplated that the wavelengths of the image sensor 202 may be selected to avoid interference with a night vision imaging system (NVIS) of the aircraft 100.

The image sensors 202 may be communicatively coupled to the controllers 204. The image sensors 202 may include one or more network interfaces, hardware interfaces, and/or communication interfaces for communicating with the controller 204. In some embodiments, the interface is a USB digital connection or an ethernet connection, although this is not intended to be limiting. The image sensors 202 may provide the images 208 to the controller 204 by the interface.

The system 200 also include one or more of the controllers 204. The controllers 204 may be communicatively coupled to various components of the system 200, such as, to the image sensors 202, the actuators 214, the input device 206, and the like. For example, the various components may be communicatively coupled by one or more buses.

The controllers 204 may automate a wide variety of in-flight tasks, reducing the workload on the pilots. One function of the controllers 204, for example, is automatic positioning of the pilot seat 114. The controllers 204 receive the images 208 from the image sensors 202. The controllers 204 may then implement one or more methods for causing the actuators 214 to control the position of the pilot seats 114 based on the images 208, as will be described further herein.

The system 200 also include the pilot seat 114. The pilot seat 114 includes or more actuators 116. The actuators 214 may be communicatively coupled to the controller 204. The actuators 214 may receive one or more actuation signals from the controller 204 causing the actuators 214 to actuate. The actuators 214 may cause the pilot seats 114 to actuate several inches. The actuation in the pilot seats 114 may allow the pilot seats 114 to accommodate different sized pilots. For example, the pilots may comfortably access the control stick 118 and the like by actuating the pilot seats 114 to a desired position. The actuation signal may also cause the actuators 214 to actuate the pilot seat 114 until an eye of a pilot is at a design eye point.

In embodiments, the actuators 214 may include, but are not limited to, vertical actuators 214a, longitudinal actuators 214b, lateral actuator 214c, and recline actuators 214d. The vertical actuators 214a may adjust a height of the pilot seat 114 within the cockpit 102. The longitudinal actuators 214b may adjust a longitudinal position of the pilot seat 114 within the cockpit 102. The longitudinal position may also be referred to as a fore/aft position. The lateral actuator 214c may adjust a lateral position of the pilot seat 114 within the cockpit 102. The lateral position may also be referred to as a side-to-side movement. The recline actuators 214d may adjust a recline angle of a seatback of the pilot seat 114 within the cockpit 102. Although the seat is described as including the vertical actuator 214a, the longitudinal actuator 214b, the lateral actuator 214c, and the recline actuator 214d, this is not intended as a limitation of the present disclosure. In some embodiments, the pilot seat 114 includes the vertical actuator 214a and the longitudinal actuator 214b. The pilot seat 114 may or may not include the lateral actuator 214c and the recline actuator 214d.

The actuators 214 may include any actuator for causing motion of the pilot seat 114. The actuators 214 may include, but are not limited to, linear actuator and/or rotary actuators. The linear actuators may include, but are not limited to, a scissor lift actuator, a rack and pinion actuator, and the like.

In some embodiments, the controller 204 may cause automatic movement of the pilot seat 114 without receiving a command from the pilot, although this is not intended to be limiting. One concern with automatic movement of the pilot seat 114 is un-commanded motion. For example, the pilot may not like when the pilot seat 114 moves automatically without first being commanded to by the pilot. The un-commanded motion may also introduce a possibility of pinching a body part of the pilot.

In some embodiments, the controller 204 may generate an actuation signal adjusting the position of the pilot seat 114 in response to receiving a seat adjust signal from the input device 206. For example, the controller 204 may cause the image sensor 202 to generate the images 208 in response to the receiving the seat adjust command. Generating the images 208 in response to receiving the seat adjust command may be advantageous to reduce the processing requirements. The controller 204 may then execute the automatic seat adjustment method on the images. It is further contemplated that the controller 204 may continually receive the images from the image sensor 202 but only execute the automatic seat adjustment method upon receiving the seat adjust signal.

The system 200 also includes the input device 206. The input device 206 generates a seat adjust signal. The input device 206 generates a seat adjust signal in response to receiving a user input. The pilot may generate the user input on the input device 206. The input device 206 may be communicatively coupled to the controller 204 for sending the seat adjust signal.

The pilot may provide the user input via any suitable input device. For example, the user input may be provided via tactile feedback or haptic technology, such as a button, a touch screen, a multi-touch surface, a pressure-triggered screen with a stylus, a keyboard, mouse, a haptic device incorporating a tactile sensor, or any other suitable device for receiving input from a user. By way of another example, the user input may be provided input device by a voice recognition system or device such as a microphone allowing the user to provide verbal or sound input. In some embodiments, the input device 206 may include, but is not limited to, a button 206a, a microphone 206b, and the like.

The input device 206 may include the button 206a. The button 206a may include one or more states, such as depressed and released. The pilot may depress the button 206a. The button 206a may generate the seat adjust signal while depressed. The controllers 204 cause the actuators 214 to continually move the pilot seat 114 while the button 206a is depressed. The pilot may release the button 206a. The button 206a may not generate the seat adjust signal while released. The controllers 204 cause the actuators 214 to stop moving the pilot seat 114 when the button 206a is released.

In some embodiments, the button 206a may continually generate the seat adjust signal while the momentary switch is depressed. The controllers 204 may then continually cause the actuators 214 to adjust the position of the pilot seat 114 as long as the button 206a remains depressed. In some embodiments, the button 206a may generate the seat adjust signal when the momentary switch is initially depressed. The controllers 204 may cause the actuators 214 to adjust the position of the pilot seat 114.

In some embodiments, the button 206a may also be a momentary switch. In this regard, momentary switch may automatically return to the released position (e.g., when the pilot stops depressing the switch).

The button 206a may be fixed within the cockpit 102. The button 206a may be fixed in any location within the cockpit 102. For example, the button 206a may be fixed to the pilot seat 114, to the central pedestal 112, to the control stick 118, and the like.

The input device 206 may include the microphone 206b. The microphone 206b may also be referred to as a voice recognition system. The pilot may utter a voice command. The microphone 206b may receive the voice command. The microphone 206b may generate the seat adjust signal in response to receiving the voice command. For example, the voice command may include, but is not limited to, move the captain or first-officer to the design eye position. The controller 204 may then cause the pilot seat 114 to move to the design eye position.

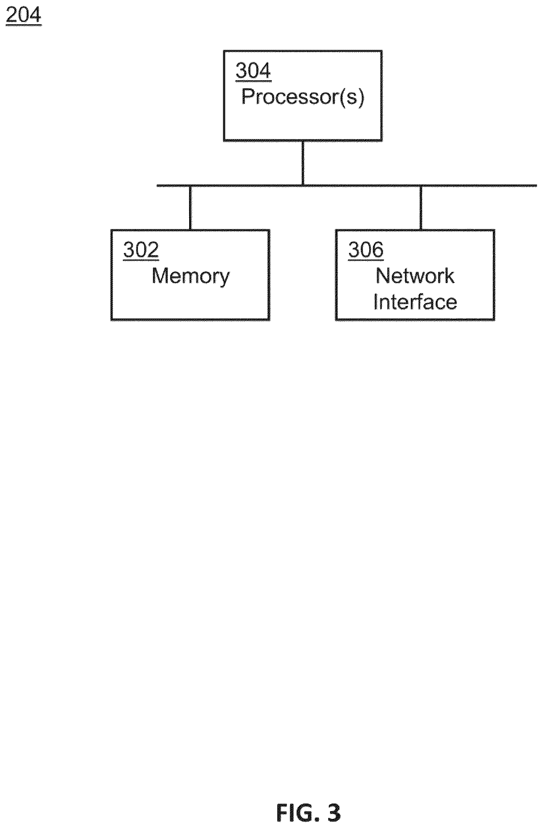

Referring now to FIG. 3, the controller 204 is described, in accordance with one or more embodiments of the present disclosure. The controller 204 may include one or more of a memory 302, one or more processors 304, a network interface 306, and the like. One or more of components of the controller 204 may be communicatively coupled by one or more control buses or the like.

The memory 302 may maintain one or more program instructions. For example, the program instructions may include, but are not limited to, eye detection software, an automatic seat positioning method, and the like. The eye detection software may cause the processors 304 to detect the eye within the images 208. As used herein, eye may refer to bare eyes (e.g., without glasses or sunglasses) and/or bespectacled eyes (e.g., eyes covered by glasses or sunglasses). The memory 302 may also maintain a distance from the image sensor 202 to a design eye position. The distance from the image sensor 202 to the design eye position may be fixed and known a priori.

The processors 304 may be configured to execute the program instructions maintained in the memory 302. In embodiments, the program instructions may cause the processors 304 to implement one or more steps to control the position of the pilot seat 114. The processors 304 detect a position of an eye within the images 208. The processors 304 determine a distance from the image sensor 202 to the eye based on the depth data 210 associated with the position of the eye within the image 208. The processors 304 determine a distance from the eye to the design eye position based on the distance from the image sensor 202 to the eye. The processors 304 also generate an actuation signal based on the distance from the eye to a design eye position. The processors 304 may be communicatively coupled to the actuators 214 by the network interface 306. The actuators receive the actuation signal by way of the network interface 306. The actuation signal causes the actuators 214 to actuate the pilot seat 114.

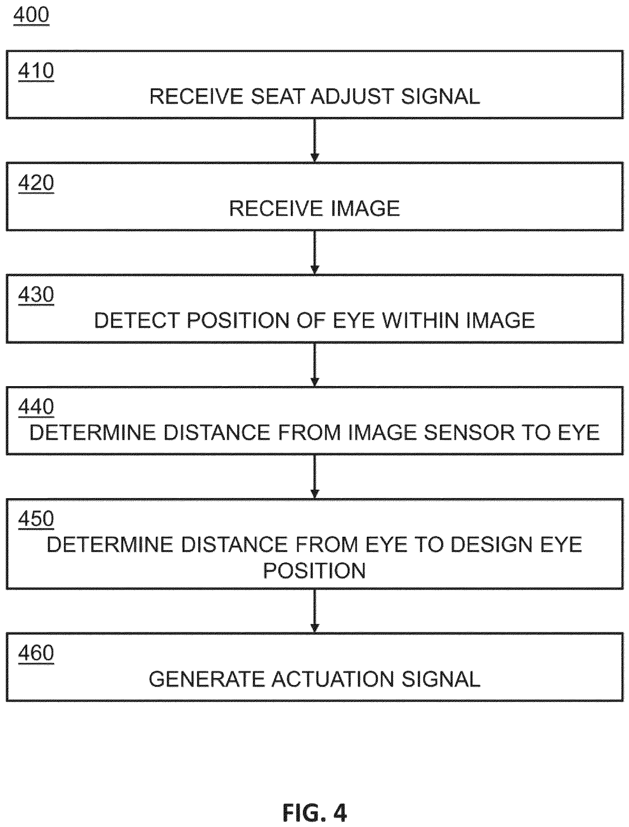

Referring now to FIG. 4, a flow diagram of a method 400 is described, in accordance with one or more embodiments of the present disclosure. The embodiments and the enabling technology described previously herein in the context of the aircraft 100 and the system 200 should be interpreted to extend to the method. For example, one or more steps of the method may be implemented by the controller 204. It is further contemplated that the method is not limited to the aircraft 100, the system 200, and/or controller 204.

In a step 410, the input device 206 generates the seat adjust signal. The processors 304 receives the seat adjust signal from the input device 206. The processors 304 may generate the actuation signal in response to the processors 304 receiving the seat adjust signal from the input device 206. The processors 304 may also cause the image sensor 202 to generate the images 208 in response to receive the seat adjust signal, although this is not intended to be limiting.

In a step 420, the image sensor 202 generates the images 208. The processors 304 receive the images 208 from the image sensor 202.

In a step 430, the processors 304 detect a position of an eye within the images 208. The processors 304 may detect the position of the eye within the images 208 using the eye detection software. For example, the processors 304 may generate one or more bounding boxes around the eye. The processors 304 may also detect the position of the head including the eyes within the images 208. For example, the processors 304 may generate one or more bounding boxes around the head.

In a step 440, the processors 304 determine a distance from the image sensor 202 to the eye based on the depth data 212 associated with the position of the eye within the image 208. For example, the position of the eye in the images 208 may be known from the step 430. The images 208 includes the depth data 212. The depth data 212 is associated with each pixel corresponding to the position of the eye. The processors 304 may look up the depth data within the pixels from memory 302.

In a step 450, the processors 304 determine a distance from the eye to a design eye position based on the distance from the image sensor 202 to the eye. The distance from the image sensor 202 to the eye may be determined in the step 440. The processors 304 determine the distance from the eye to the design eye position based on the distance from the image sensor 202 to the eye and based on the distance from the image sensor 202 to the design eye position. The distance to the design eye position may be fixed relative to the image sensor 202 and known a priori by the processors 304. The distances from the image sensor to the design eye position, from the image sensor to the eye, and from the eye to the design eye position each include a longitudinal distance, a vertical distance, and a lateral distance. In this regard, the distances are in three-dimensional space. In some embodiments, the processors 304 determine a difference in distance between the distance from the image sensor to the design eye position and the distance from the image sensor to the eye. The difference in distance indicates the distance from the eye to the design eye position. The distances may be subtracted to determine the difference in distance. For example, the distance from the image sensor 202 to the eye may be subtracted from the distance from the image sensor 202 to the design eye position.

In a step 460, the processors 304 generate an actuation signal. The actuation signal is generated based on the distance from the eye to the design eye position. The actuators 214 receive the actuation signal. The actuation signal causes the actuators 214 to actuate the pilot seat 114. The actuation signal includes a longitudinal actuation signal and a vertical actuation signal, and optionally may include a lateral actuation signal and/or a recline actuation signal. The vertical actuation signal, the longitudinal actuation signal, the lateral actuation signal, and the recline actuation signal causes the vertical actuator 214a, the longitudinal actuator 214b, the lateral actuator 214c, and the recline actuator 214d to actuate, respectively. In some embodiments, the actuation signal causes the actuators 214 to simultaneously adjust the height and the longitudinal position of the pilot seat 114. Simultaneously adjusting the height and the longitudinal position may be faster than adjusting the height and adjusting the longitudinal position in series. It is further contemplated that the actuation signal may cause the actuators 214 to adjust the height and longitudinal position in series (e.g., adjust the height and then adjust the longitudinal position; adjust the longitudinal position and then adjust the height).

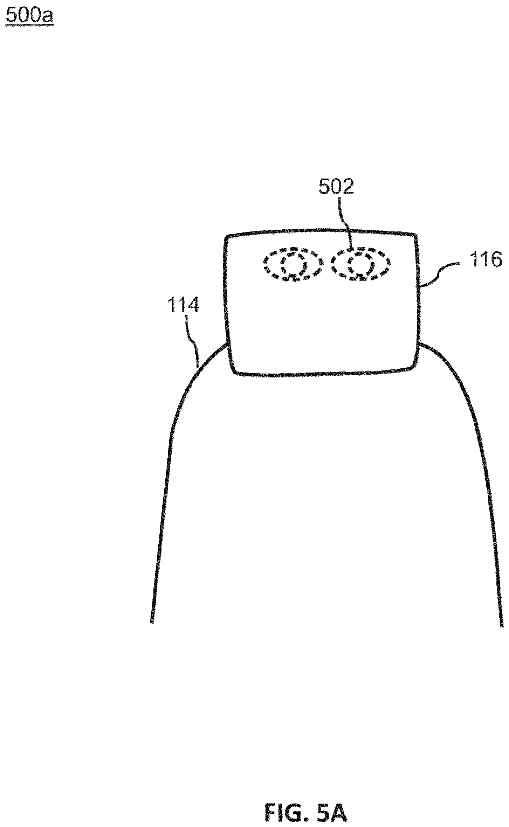

Referring now to FIGS. 5A-5D, graphical illustrations of the method 400 implemented in the cockpit 102 are now described, in accordance with one or more embodiments of the present disclosure. The figures depict a design eye position 502, a pilot 504 with eyes 506, and automatic positioning of the pilot seat 114. As may be understood, the figures are merely provided as illustrations of the various processor executable methods described above.

The design eye position 502 is now described. The design eye position 502 may also be referred to as a reference point, design eye position, eye reference point, design eye reference position, and the like. Each of the flight displays 104 are visible or within field-of-view at the design eye position. The windscreen 108 is within a given cut-off angle at the design eye position 502. Pilots 504 with eyes 506 positioned outside the design eye position 502 may be unable to see a portion of the flight displays 104. For example, the glareshield 110 may block a portion of the PFD 104a or the MFD 104b for pilots who are seated such that the eyes of the pilot are above the design eye position. Similarly, pilots 504 with eyes 506 positioned outside the design eye position 502 may be unable to see outside the aircraft 100 through the windscreen 108 at the given cutoff angle. For example, the glareshield 110 may block a portion of the windscreen 108, and similarly a portion of the world outside of the aircraft 100, when the eyes 506 of the pilot 504 are below the design eye position 502.

The design eye position 502 may be a three-dimensional position in the cockpit 102. The three-dimensional position may be defined relative to the image sensors 202. For example, the three-dimension position may include a lateral position, a longitudinal position, and a vertical position.

The design eye position may be configured in accordance with aviation guidelines and/or standards put forth by, but not limited to: the Federal Aviation Administration (FAA), the European Aviation Safety Agency (EASA), or any other flight certification agency or organization; the American National Standards Institute (ANSI) or any other standards setting organization or company; and the like. For example, the design eye position may be configured according to the seat positioning seat forth in FAA FAR 25.777. The design eye position may also be defined based on a configuration of the aircraft 100 and/or the cockpit 102.

The figures depict images 500. The images 500 may be examples of the images 208. As depicted, the images 500 generated from the image sensor 202 are oriented directly in front of the pilot seats 114, although this is not intended to be limiting. Additional locations of the image sensor 202 in the cockpit 102 are contemplated, such that the field of view of the images 500 is not intended to be limiting.

The design eye position 502 remains at a fixed position relative to the image sensor 202 generating the images 500. The design eye position 502 remains fixed within the images 500 by being at the fixed position relative to the image sensor 202. The pilot seat 114, the pilot 504, and the eyes 506 of the pilot 504 move relative to the image sensor 202. The pilot seat 114, the pilot 504, and the eyes 506 of the pilot 504 move within the images 500 by moving relative to the image sensor 202.

FIG. 5A depicts an image 500a of the pilot seat 114 in a first position.

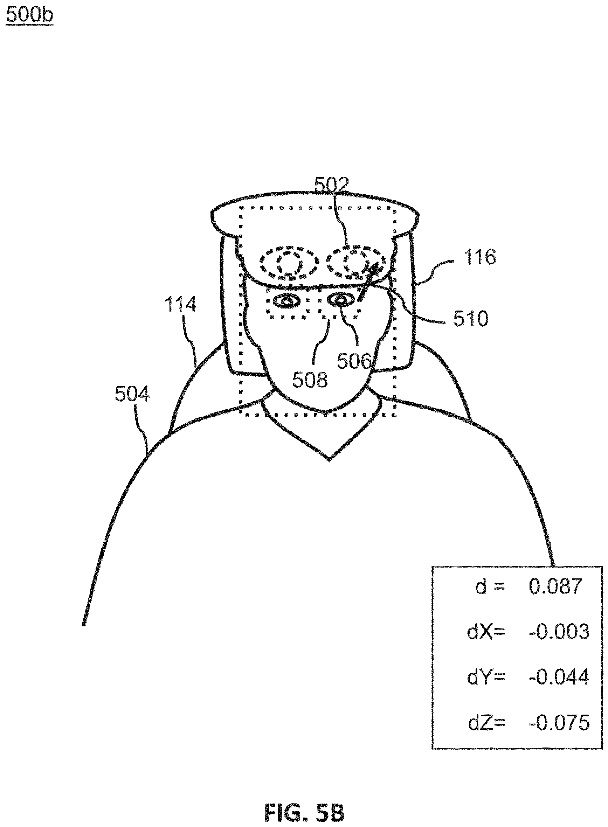

FIG. 5B depicts an image 500b of the pilot seat 114 in the first position with a pilot 504 sitting on the pilot seat 114. The pilot 504 has eyes 506. The processor 304 detects the position of the eyes 506 within the image 500b. For example, the processor 304 may generate bounding boxes 508 around the eyes 506 using an eye detection software or the like. The processor 304 also determines a distance 510 from the eye to the design eye position. The distance 510 may include a total distance value (d), a lateral distance value (dX), a longitudinal distance value (dY), and a vertical distance value (dZ). The total distance value (d) may be the sum of squares of the lateral distance value (dX), the longitudinal distance value (dY), and the vertical distance value (dZ). For example, the distance 510 is depicted with total distance value (d) of 0.087 meters, lateral distance value (dX) of -0.003 meters, longitudinal distance value (dY) of -0.044 meters, and vertical distance value (dZ) of -0.072 meters. In this example, the processor 304 has determined that the pilot seat 114 must be moved longitudinally forward .044 meters and moved vertically upward .072 meters to cause a portion of the eye 506 to be disposed within the design eye position 502. The processor 304 then generate the actuation signal causing the vertical actuator 214a to actuate the pilot seat 114 vertically upward and the longitudinal actuator 214b to actuate the pilot seat 114 longitudinally forward.

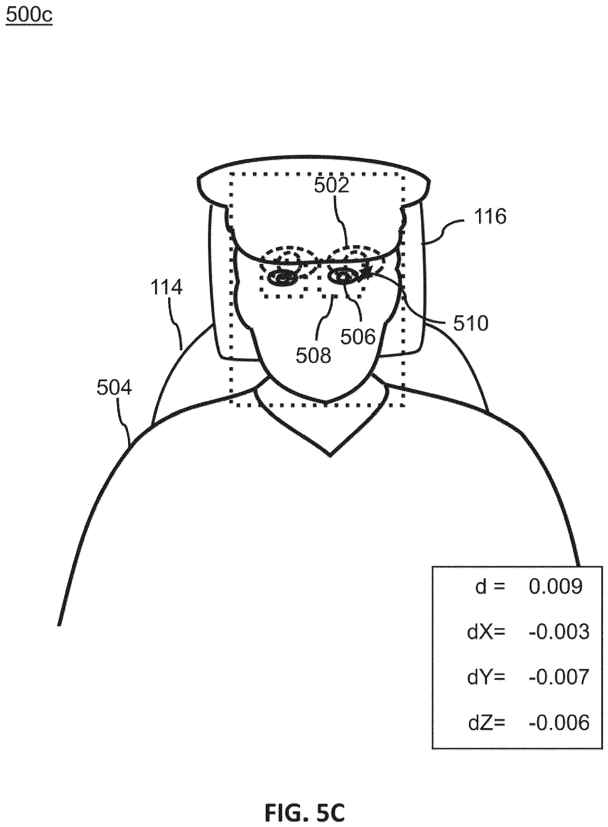

The actuators 214 may cause the actuation from the first position to a second position. FIG. 5C depicts an image 500b of the pilot seat 114 in the second position with the pilot 504 sitting on the pilot seat 114. The pilot 504 and the pilot seat 114 have been moved vertically upwards and longitudinally forwards by the actuators 214.

In embodiments, the processor 304 may continually detect the distance 510. The processors 304 may continually perform one or more steps of the method 400 to generate the actuator signal and control the actuators 214 using one or more control loops. For example, the step 420 through step 460 may be iteratively performed. The control loops may include a feedback control loop where the distance 510 is continually detected. For example, FIG. 5C depicts the distance 510 with total distance value (d) of 0.009 meters, lateral distance value (dX) of -0.003 meters, longitudinal distance value (dY) of -0.007 meters, and vertical distance value (dZ) of -0.006 meters. In this example, the lateral distance value (dX) has not been adjusted, although this is not intended to be limiting. It is further contemplated that the pilot seat 114 may include the lateral actuators 214c for adjusting the lateral distance value (dX).

In some embodiments, various steps of the method 400 may be iteratively performed until the distance 510 is within a predefined tolerance. The steps may be iteratively performed in a control loop. The predefined tolerance may be provided to accommodate for relative motion or vibrations of the aircraft 100, the cockpit 102, the image sensor 202, the pilot 504, the eyes 506, and the like. For example, the predefined tolerance may include, but is not limited to, within 1 centimeter. In this example, the total distance value (d) of 0.009 meters is less than the exemplary predefined tolerance of 0.010 meters, such that the control loop may be stopped. It is further contemplated that any of the total distance value (d), the lateral distance value (dX), the longitudinal distance value (dY), and/or the vertical distance value (dZ) may include separate predefined tolerances.

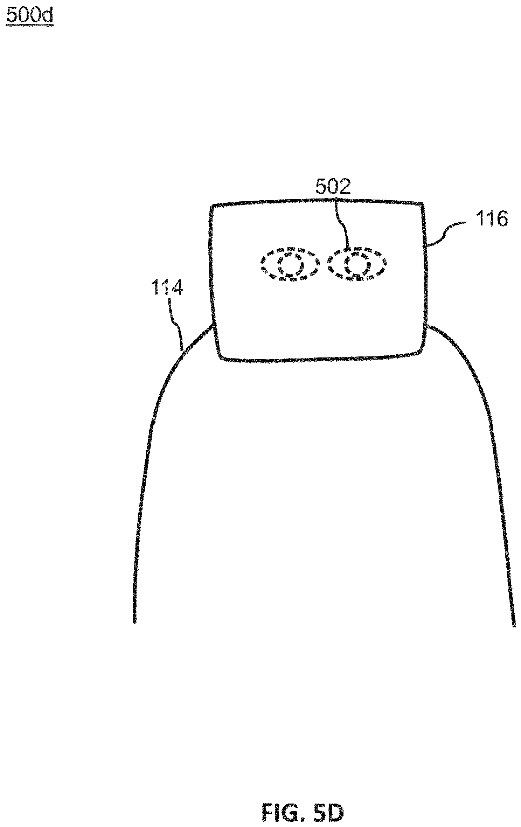

FIG. 5D depicts an image 500d of the pilot seat 114 in the second position.

Referring generally again to FIGS. 1-5D. The methods, operations, and/or functionality disclosed may be implemented as sets of instructions or software readable by a device. The steps may include computations which may be performed simultaneously, in parallel, or sequentially. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented. It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

A processor may include any processing unit known in the art. For example, the processor may include a multi-core processor, a single-core processor, a reconfigurable logic device (e.g., FPGAs), a digital signal processor (DSP), a special purpose logic device (e.g., ASICs)), or other integrated formats. Those skilled in the art will recognize that aspects of the embodiments disclosed herein, in whole or in part, can be equivalently implemented in integrated circuits, as one or more programs running on one or more controllers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software/and or firmware would be well within the skill of one skilled in the art in light of this disclosure. Such hardware, software, and/or firmware implementation may be a design choice based on various cost, efficiency, or other metrics. In this sense, the processor(s) may include any microprocessor-type device configured to execute software algorithms and/or instructions. In general, the term "processor" may be broadly defined to encompass any device having one or more processing elements, which execute program instructions from memory, from firmware, or by hardware implemented functions. It should be recognized that the steps described throughout the present disclosure may be carried out by the processors.

A memory may include any storage medium known in the art. For example, the storage medium may include a non-transitory memory medium. For instance, the non-transitory memory medium may include, but is not limited to, a read-only memory (ROM), a random-access memory (RAM), a magnetic or optical memory device (e.g., disk), a solid-state drive and the like. It is further noted that memory may be housed in a common controller housing with the one or more processor(s). For example, the memory and the processor may be housed in a processing unit, a desktop computer, or the like. In an alternative embodiment, the memory may be located remotely with respect to the physical location of the processor. In another embodiment, the memory maintains program instructions for causing the processor(s) to carry out the various steps described through the present disclosure.

A network interface may include any suitable network interface for interfacing with the network bus, such as, but not limited to, a wired or a wireless network interface. The network interface may include mechanical, electrical, or signaling circuitry for communicating data to and from the network and subsequently to various other nodes. The network interface may be configured to receive various input signals and transmit various output signals. The network interface may be communicatively coupled to various other network interfaces over a network bus. The network interface may wirelessly communicate with the network bus (e.g., via one or more radio signals).

In the case of a control algorithm, one or more program instructions or methods may be configured to operate via proportional control, feedback control, feedforward control, integral control, proportional-derivative (PD) control, proportional-integral (PI) control, proportional-integral-derivative (PID) control, or the like.

From the above description, the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A controller (204) comprising:
a memory (302) maintaining program instructions; and
one or more processors (304) configured to execute the program instructions causing the one or more processors to:
receive an image (208) from an image sensor (202); wherein the image comprises depth data;
detect a position of an eye within the image;
determine a distance from the image sensor to the eye based on the depth data associated with the position of the eye within the image;
determine a distance from the eye to a design eye position based on the distance from the image sensor to the eye;
generate an actuation signal based on the distance from the eye to the design eye position; wherein the actuation signal causes one or more actuators to actuate a pilot seat; wherein the actuation of the pilot seat causes the eye to move towards the design eye position reducing the distance from the eye to the design eye position.

2. The controller of claim 1, wherein the memory (302) comprises a distance from the image sensor (202) to the design eye position; wherein the program instructions cause the one or more processors (304) to determine the distance from the eye to the design eye position based on the distance from the image sensor to the eye and based on the distance from the image sensor to the design eye position.

3. The controller of claim 2, wherein the program instructions cause the one or more processors (304) to determine a difference in distance between the distance from the image sensor (202) to the design eye position and the distance from the image sensor to the eye, the difference in distance indicating the distance from the eye to the design eye position.

4. The controller of claim 1, 2 or 3, wherein the distance from the eye to the design eye position comprises at least a longitudinal distance value and a vertical distance value.

5. The controller of any preceding claim, wherein the program instructions cause the one or more processors to continually generate the actuation signal until at least a portion of the eye is disposed at the design eye position.

6. The controller of any preceding claim, wherein the image (208) is one of a plurality of images in a video; wherein the program instructions cause the one or more processors (304) to continually generate the actuation signal in a feedback loop using the video.

7. The controller of any preceding claim, wherein detecting the position of the eye within the image (208) comprises generating a bounding box (508) around the position of the eye.

8. The controller of any preceding claim, the program instructions causing the one or more processors (304) to:
receive a seat adjust signal; and
generate the actuation signal in response to receiving the seat adjust signal.

9. A system comprising:
a pilot seat (114) comprising one or more actuators (214);
an image sensor (202);
a controller (204) comprising:
a memory (302) maintaining program instructions; and
one or more processors (304) configured to execute the program instructions causing the one or more processors to:
receive an image (208) from the image sensor (202); wherein the image comprises depth data;
detect a position of an eye within the image;
determine a distance from the image sensor to the eye based on the depth data associated with the position of the eye within the image;
determine a distance from the eye to a design eye position based on the distance from the image sensor to the eye;
generate an actuation signal based on the distance from the eye to the design eye position; wherein the actuation signal causes the one or more actuators to actuate the pilot seat; wherein the actuation of the pilot seat causes the eye to move towards the design eye position reducing the distance from the eye to the design eye position.

10. The system of claim 9, wherein the one or more actuators (214) comprise a vertical actuator (214a) and a longitudinal actuator (214b); wherein the vertical actuator is configured to vertically actuate the pilot seat (114); wherein the longitudinal actuator is configured to longitudinally actuate the pilot seat.

11. The system of claim 10, wherein the actuation signal causes the vertical actuator (214a) and the longitudinal actuator (214b) to simultaneously actuate the pilot seat (114).

12. The system of claim 9, 10 or 11, wherein the image sensor (202) comprises a light detection and ranging, LIDAR, system configured to generate the depth data.

13. The system of any of claims 9 to 12, wherein the design eye position is a fixed position relative to the image sensor (202).

14. The system of any of claims 9 to 13, wherein the program instructions cause the one or more processors (304) to continually generate the actuation signal until at least a portion of the eye is disposed at the design eye position.

15. The system of any of claims 9 to 14, comprising an input device (206) configured to generate a seat adjust signal;
wherein the program instructions cause the one or more processors (304) to:
receive the seat adjust signal from the input device; and
generate the actuation signal in response to receiving the seat adjust signal.
